(19) Europäisches Patentamt
European Patent Office
Office européen des brevets

(11) **EP 3 560 701 B1**

(12) **EUROPÄISCHE PATENTSCHRIFT**

(45) Veröffentlichungstag und Bekanntmachung des Hinweises auf die Patenterteilung:
**21.12.2022 Patentblatt 2022/51**

(21) Anmeldenummer: **19170615.9**

(22) Anmeldetag: **23.04.2019**

(51) Internationale Patentklassifikation (IPC):
**B32B 17/06** *(2006.01)* **B32B 17/10** *(2006.01)*
**C03B 33/07** *(2006.01)*

(52) Gemeinsame Patentklassifikation (CPC):
**B32B 17/069; C03B 33/076;** B32B 2307/3065;
B32B 2605/00

(54) **VERBUNDGLAS MIT HOHEM BRANDWIDERSTAND**

LAMINATED GLASS WITH HIGH FIRE RESISTANCE

VERRE COMPOSITE À RÉSISTANCE AU FEU ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2018 DE 102018110148**

(43) Veröffentlichungstag der Anmeldung:
**30.10.2019 Patentblatt 2019/44**

(73) Patentinhaber: **SCHOTT AG**
**55122 Mainz (DE)**

(72) Erfinder:
• **PANZNER, Gerrit**
**07407 Rudolstadt (DE)**

• **KUGELMANN, Helmut**
**86156 Augsburg (DE)**
• **FRANKE, Matthias**
**07407 Rudolstadt (DE)**

(74) Vertreter: **Fuchs Patentanwälte Partnerschaft mbB**
**Westhafenplatz 1**
**60327 Frankfurt am Main (DE)**

(56) Entgegenhaltungen:
**EP-A1- 2 084 001 DE-A1-102012 220 009**

**Beschreibung**

Diese Erfindung betrifft ein Verbundglas mit hohem Brandwiderstand, ein Herstellungsverfahren für das Verbundglas und dessen Verwendung in der Architektur sowie im Fahrzeug- und Flugzeugbau. Erfindungsgemäß ist auch ein Brandschutzsystem mit dem Verbundglas und einem Rahmen.

Stand der Technik

Verbundgläser mit hohem Brandwiderstand sind aus dem Stand der Technik bekannt. Diese Verbundgläser weisen in der Regel eine Intumeszenzschicht in Form einer Gelschicht zwischen zwei Glas- oder Glaskeramikscheiben auf, die bei Brandeinwirkung aufschäumt und auf diese Weise eine Isolation gegen Wärmestrahlung erzielt. Dabei sind grundsätzlich zwei Fertigungsvarianten von Verbundgläsern zu unterscheiden. In einer ersten Variante wird das während der Herstellung noch flüssige Intumeszenzmaterial auf eine der Scheiben aufgegossen, wo es trocknen gelassen wird. Die so erhältlichen Verbundgläser haben oft sehr dünne Gelschichten (<2 mm) und weisen meistens mehrere solcher Schichten auf. Sie können je nach Aufbau sehr hohe Brandwiderstände aufweisen. Sie sind dann aber vergleichsweise dick. Ein so hergestelltes Verbundglas mit einem Brandwiderstand von EW 120 wird deutlich über 15 mm dick sein und entsprechend schwer. In einer zweiten Variante werden die beiden Scheiben parallel zueinander aufgestellt, sodass sich zwischen den Scheiben ein Zwischenraum bildet, der rundherum mit einer Dichtung abgedichtet wird. Durch eine Öffnung in der Randdichtung wird das noch flüssige Intumeszenzmaterial in den Zwischenraum gegossen, wo es in der Regel chemisch ausgehärtet wird. Dieses Verfahren wird Cast in place-Verfahren genannt. Derzeit sind keine nach der zweiten Variante hergestellten Verbundgläser auf dem Markt verfügbar, die einen Brandwiderstand EW 120 aufweisen, schneidbar sind und eine geringe Dicke haben.

GB 2 096 944 A betrifft Verbundgläser mit Brandwiderstand. In dem Dokument werden besonders dicke Gläser empfohlen, weil diese eine höhere Stabilität und einen größeren Brandwiderstand ermöglichen sollen als dünne Gläser. Dabei können insbesondere vorgespannte Gläser zum Einsatz kommen, da diese eine höhere Bruchfestigkeit aufweisen. Die Bruchfestigkeit spielt für den ermittelten Brandwiderstand eine bedeutende Rolle, da der Bruch der Scheiben der Verbundgläser den Verlust von Brandwiderstand zur Folge hat. Das in dem Dokument mit Bezug auf Figur 4 beschriebene Beispiel hat eine Dicke von 17,6 mm und widerstand dem Brandversuch für nur 50 Minuten. Es war somit weit davon entfernt, einen Brandwiderstand von EW 120 zu erreichen. Sämtliche weiteren Versuche des zitierten Dokuments erzielen höhere Brandwiderstände ausschließlich durch noch höhere Verbunddicken. So erreicht das Verbundglas des dort beschriebenen Beispiels 4 eine Widerstandszeit von 90 Minuten bei einer Schichtdicke von stattlichen 30 mm.

EP 0 524 418 A1 betrifft ebenfalls Verbundgläser mit Brandwiderstand, die eine einseitig aufgeraute Glaskeramik aufweisen. Auch hier wird ein besonderes Augenmerk auf die Bruchfestigkeit im Brandfall gelegt. In Beispiel 1 wird ein Verbundglas mit 12 mm Dicke getestet. Die Schneidbarkeit wird nicht diskutiert und es wird für beide Außenscheiben ein Kalknatronglas verwendet, das eine thermische Ausdehnung von deutlich über $4*10^{-6}$ /K aufweist. Die anderen Verbundgläser in diesem Dokument haben sehr große Dicken. Beim Brand brechen beide Kalknatronglas-Außenscheiben aufgrund ihrer hohen thermischen Ausdehnung und organische Anteile (wie Polyolen) der Intumeszenzschicht können sich aufgrund des Luftkontakts entzünden.

Auch US 6,379,825 B1 beschreibt Verbundgläser mit Brandschutzwirkung. Allerdings erreichen diese auch bei Verbunddicken von teilweise deutlich über 15 mm nicht den geforderten Brandwiderstand von EW 120.

EP 2 995 450 A1 offenbart ebenfalls Verbundgläser mit Brandwiderstand. Die dort beschriebenen Verbundgläser weisen allerdings thermisch vorgespannte Scheiben auf mit Druckspannungen von wenigstens 200 MPa. Thermisch vorgespannte Scheiben dieser Art sind nicht schneidbar, sondern zerspringen beim Versuch, diese zu zerschneiden.

DE 10 2012 220 009 A1 betrifft ein monolithisches durchbruchhemmendes Verbundglas umfassend eine angriffsseitige Deckscheibe aus Glas, eine angriffsabgewandte Deckscheibe aus Glas, mindestens eine weitere Scheibe aus Glas, mindestens eine Scheibe aus einem schlagzähem Kunststoff, sowie Verbundschichten, wobei eine Teilmenge von mindestens 75 Vol-% des schlagzähen Kunststoffes angriffsseitig vor der Mittelebene M des Verbundglases angeordnet ist.

EP 2 084 001 A1 offenbart eine feuerbeständige Verbundverglasung mit mindestens einer Zwischenschicht und mindestens zwei transparenten Scheiben, wobei die Zwischenschicht ein Alkalimetallsilikat, 35 bis 43 Gew.-% Wasser und 2 bis 20 Gew.-% organisches Material enthält.

Beschreibung der Erfindung

**Verbundglas**

Es wäre wünschenswert, ein Verbundglas mit hohem Brandwiderstand, insbesondere Brandwiderstand von mindestens EW 120, zu haben, das bei sehr geringer Dicke dennoch schneidbar ist. Schneidbare Verbundgläser haben den Vorteil, dass sie beim Hersteller nicht erst auf Bestellung gefertigt werden müssen, sondern in großen Formaten vorgefertigt werden können. Die großformatigen Verbundgläser können dann auf Kundenbestellung zugeschnitten und ausgeliefert werden, oder der Kunde schneidet die Verbundgläser selbst nach Wunsch zu. Auf diese Weise lässt sich eine wirtschaftlichere Fertigung großer Formate stets gleicher Größe realisieren. Besonders vorteilhaft sind dabei natürlich Verbundgläser, die verhältnismäßig dünn sind, da mit geringer Dicke auch geringes Gewicht einhergeht, was besonders im Fahrzeugbau und noch mehr im Flugzeugbau von Bedeutung ist.

Die Gegenstände der Patentansprüche zeigen die gewünschten Eigenschaften.

Die Erfindung betrifft ein Verbundglas mit Widerstand gegen Brandwirkung, mit einer brandabgewandten und einer brandzugewandten Seite, aufweisend genau zwei Scheiben aus Floatglas oder gefloateter Glaskeramik, wobei das Verbundglas zumindest eine unter Temperatureinwirkung intumeszierende Schicht enthält, die vorzugsweise zwischen den beiden Außenscheiben angeordnet ist, wobei das Verbundglas je eine Außenscheibe aus Floatglas oder gefloateter Glaskeramik auf der brandabgewandten und auf der brandzugewandten Seite als abschließende Scheibe aufweist, wobei die brandzugewandte und/oder die brandabgewandte Außenscheibe einen thermischen Längenausdehnungskoeffizienten $\alpha$ über einen Temperaturbereich von 20 bis 300 °C von höchstens $4{,}5*10^{-6}$ /K oder höchstens $4*10^{-6}$ /K aufweist, und wobei die brandzugewandte Außenscheibe einen thermischen Längenausdehnungskoeffizienten $\alpha$ über einen Temperaturbereich von 20 bis 300 °C von wenigstens $1*10^{-6}$ /K aufweist, wobei das Verbundglas 1 keine chemisch vorgespannten Scheiben mit einer Druckspannung an der Oberfläche von mehr als 1000 MPa und keine thermisch vorgespannten Scheiben mit einer Druckspannung an der Oberfläche von mehr als 200 MPa aufweist, wobei der thermische Längenausdehnungskoeffizient $\alpha$ gemäß DIN ISO 7991:1998-02 bestimmt wird.

Floatglas bzw. gefloatete Glaskeramik wird erfindungsgemäß eingesetzt, da solche Scheiben eine besonders gleichförmige, glatte Oberfläche haben. Gefloatete Scheiben weisen insbesondere feuerpolierte Oberflächen mit besonders geringer Rauheit auf.

Dieser erfindungsgemäße Aufbau eines Verbundglases hat sich als besonders vorteilhaft erwiesen. Im Stand der Technik wird oftmals empfohlen, die thermische Ausdehnung der verwendeten Scheiben so gering wie möglich zu halten. Dies ist allerdings nicht unter allen Umständen vorteilhaft. Erfindungsgemäß soll die brandzugewandte Außenscheibe einen thermischen Ausdehnungskoeffizienten $\alpha$ von wenigstens $1*10^{-6}$ /K, vorzugsweise wenigstens $2*10^{-6}$ /K, aufweisen. Durch einen Mindestwert für die thermische Ausdehnung der brandzugewandten Außenscheibe wird sichergestellt, dass diese im Brandfalle nach relativ kurzer Zeit bricht. Der Bruch der brandzugewandten Außenscheibe entlastet das Verbundglas von dem Druck, der in dem Verbundglas durch den hohen Wassergehalt der intumeszierenden Schicht entsteht. Bricht die brandzugewandten Außenscheibe nicht unter Hitzeeinwirkung, so besteht das Risiko, das die brandabgewandte Außenscheibe unter dem Einfluss des Druckes in dem Verbundglas zuerst bricht, wodurch kein Brandwiderstand mehr gegeben wäre.

In einer erfindungsgemäß bevorzugten Ausführungsform beträgt der thermische Ausdehnungskoeffizient für die brandzugewandte und/oder die brandabgewandte Außenscheibe weniger als $4*10^{-6}$ /K oder weniger als $3{,}5*10^{-6}$ /K. In einer Ausführungsform beträgt der thermische Ausdehnungskoeffizient für die brandzugewandte und/ oder die brandabgewandte Außenscheibe $1*10^{-6}$ /K bis $4{,}5*10^{-6}$ /K, insbesondere von $1{,}5*10^{-6}$ /K bis $4*10^{-6}$ /K oder von $2*10^{-6}$ /K bis $3{,}5*10^{-6}$ /K. In einer Ausführungsform wird für die brandabgewandte Außenscheibe eine Glaskeramikscheibe mit einem thermischen Ausdehnungskoeffizienten von weniger als $1*10^{-6}$ /K, insbesondere weniger als $0{,}5*10^{-6}$ /K, verwendet. Der thermische Ausdehnungskoeffizient kann bei Glaskeramik auch negativ sein.

In einer symmetrischen Ausführungsform des erfindungsgemäßen Verbundglases wird sowohl für die brandzugewandte als auch für die brandabgewandte Außenscheibe ein Floatglas verwendet mit einem thermischen Ausdehnungskoeffizienten im Bereich von $1*10^{-6}$ /K bis $4{,}5*10^{-6}$ /K, insbesondere von $2*10^{-6}$ /K bis $3{,}5*10^{-6}$ /K. Das Floatglas kann in diesem Fall ein Borosilicatglas sein. Auf diese Weise wird sichergestellt, dass die brandzugewandte Außenscheibe im Brandfall rechtzeitig bricht und die Bruchfestigkeit unter Temperaturbelastung ausreichend groß ist, um der Hitzeeinwirkung für einen langen Zeitraum standzuhalten.

In einer asymmetrischen Ausführungsform des erfindungsgemäßen Verbundglases wird für die brandzugewandte Außenscheibe ein Floatglas mit einem thermischen Ausdehnungskoeffizienten von wenigstens $1*10^{-6}$ /K, insbesondere wenigstens $3*10^{-6}$ /K, wenigstens $6*10^{-6}$ /K oder sogar wenigstens $7*10^{-6}$ /K, und für die brandabgewandte Außenscheibe eine gefloatete Glaskeramikscheibe mit einem thermischen Ausdehnungskoeffizienten von weniger als $1*10^{-6}$ /K, insbesondere weniger als $0{,}5*10^{-6}$ /K, oder ein Borosilicatglas mit einem thermischen Ausdehnungskoeffizienten von weniger als $4*10^{-6}$ /K verwendet. Das Floatglas für die brandzugewandte Außenscheibe kann in diesem Fall ein Kalknatronglas oder ein Borosilicatglas mit entsprechend großer thermischer Ausdehnung sein.

Unter "Verbundglas" wird erfindungsgemäß ein Verbund mehrerer im Wesentlichen parallel zueinander angeordneter Glas- und/oder Glaskeramikscheiben mit jeweils wenigstens einer zwischen den Scheiben angeordneter Zwischenschicht verstanden. Die Scheiben und Zwischenschichten werden so verarbeitet, dass sie aneinander haften. Dafür werden gegebenenfalls Haftvermittler und/oder Klebstoffe eingesetzt, die dem Fachmann für solche Zwecke bekannt sind. Die erfindungsgemäßen Verbundgläser sind vorzugsweise monolithisch, haben also insbesondere keinen Scheibenzwischenraum.

Als "Außenscheibe" werden die Scheiben des Verbundglases bezeichnet, die im Verbundglas außen angeordnet sind und somit mit einer ihrer Hauptseiten eine Grenzfläche zur umgebenden Luft aufweisen. Dies schließt erfindungsgemäß nicht aus, dass die Außenscheiben eine oder mehrere Beschichtungen aufweisen. Die "Hauptseiten" einer Scheibe sind die beiden hinsichtlich der Fläche größten Seiten der Scheiben. In einer bevorzugten Ausführungsform sind die brandabgewandte und/oder die brandzugewandte Außenscheibe unbeschichtet.

"Brandabgewandt" ist diejenige Außenscheibe des Verbundglases, die bei der Verwendung des Verbundglases von dem erwarteten Brand abgewandt ist. "Brandzugewandt" ist entsprechend die dem erwarteten Brand zugewandte Seite. Erfindungsgemäß ist daher auch die Verwendung der hierin beschriebenen Verbundgläser zur Erzielung einer Brandbarriere bei Brandeinwirkung auf die brandzugewandte Seite.

Die Begriffe "thermischer Ausdehnungskoeffizient" und "thermische Ausdehnung" werden in dieser Anmeldung synonym verwendet. Gemeint ist der thermische Längenausdehnungskoeffizient $\alpha$ über einen Temperaturbereich von 20 bis 300 °C. Der thermische Längenausdehnungskoeffizient wird gemäß DIN ISO 7991:1998-02 bestimmt.

Das Verbundglas dieser Erfindung weist genau zwei Floatglas- bzw. gefloatete Glaskeramikscheiben auf. Mit anderen Worten weist das Verbundglas nur die beiden Außenscheiben auf und keine weiteren Glas- oder Glaskeramikscheiben. Auf diese Weise kann ein besonders dünnes Verbundglas erhalten werden. Es ist erstaunlich, dass sich mit dem erfindungsgemäßen Verbundglas derart hohe Brandwiderstände erzielen lassen, obwohl die Schichtanzahl und Dicke gering sind.

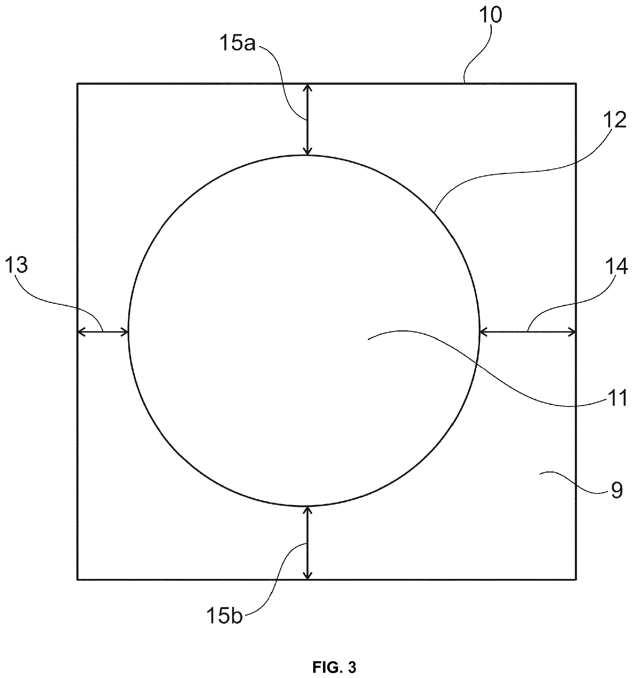

In einer Ausführungsform weist die brandzugewandte und/oder die brandabgewandte Außenscheibe eine Temperaturunterschiedsfestigkeit (TUF) von mehr als 100 K, insbesondere von mehr als 200 K, auf. In einer Ausführungsform wird die genannte Temperaturunterschiedsfestigkeit für die brandzugewandte Außenscheibe gewählt und für die brandabgewandte Außenscheibe eine Glaskeramikscheibe. Die Messung der Temperaturunterschiedsfestigkeit wird weiter unten mit Bezug zu Figur 3 erläutert.

In einer Ausführungsform weist die brandzugewandte und/oder die brandabgewandte Außenscheibe eine spezifische Wärmespannung von <0,5 MPa/K, insbesondere <0,3 MPa/K, auf. In einer Ausführungsform wird die genannte spezifische Wärmespannung für die brandzugewandte Außenscheibe gewählt und für die brandabgewandte Außenscheibe eine Glaskeramikscheibe. Die spezifische Wärmespannung $\varphi$ ist definiert als:

$$\varphi = \frac{E \cdot \alpha}{1 - \mu}$$

mit folgenden Materialdaten der Scheibe: Elastizitätsmodul E, thermischer Ausdehnungskoeffizient a, Querkontraktionszahl $\mu$ (auch Poissonzahl genannt).

In einer Ausführungsform weist die brandzugewandte und/oder die brandabgewandte Außenscheibe eine Dicke im Bereich von 1 mm bis 10 mm, insbesondere von 2 mm bis 8 mm oder von 3 mm bis 5 mm auf. Es ist erfahrungsgemäß bevorzugt, dass die Dicken der verwendeten Scheiben in dem Verbundglas möglichst gering sind, um einen insgesamt möglichst dünnen Verbund zu erzielen, insbesondere ist in einer Ausführungsform keine der verwendeten Scheiben ≥6 mm dick. Allerdings wird die Schneidbarkeit des Verbundglases schlechter, je dünner die verwendeten Scheiben sind. Ferner ist eine gewisse Mindestdicke vorteilhaft, um eine ausreichende mechanische Stabilität und einen ausreichenden Brandwiderstand zu erzielen. Bevorzugte Verbundgläser weisen ausschließlich Glas- oder Glaskeramikscheiben auf, die weniger als 10 mm, insbesondere weniger als 7 mm dick, sind. Andernfalls lässt sich die gewünschte geringe Gesamtdicke nicht erzielen. Es hat sich als vorteilhaft erwiesen, für die brandzugewandte Außenscheibe und die brandabgewandte Außenscheibe ähnliche Dicken auszuwählen. Vorzugsweise beträgt der Unterschied in den Dicken dieser beiden Scheiben hinsichtlich der dünneren Scheibe relativ zur dickeren Scheibe maximal 33 %, insbesondere maximal 25 % oder maximal 20 %. In einer Ausführungsform sind die beiden Scheiben in etwa gleich dick, d.h. die dünnere Scheibe ist im Verhältnis zur dickeren Scheibe höchstens 10 %, insbesondere höchstens 5 % oder höchstens 2,5 % dünner.

Die Verbundgläser dieser Erfindung weisen einen intumeszierenden Interlayer auf, bei dem es sich bevorzugt um einen Polysilikat-Interlayer handelt. Der Gehalt an Polyolen in dem intumeszierenden Interlayer sollte einen Wert von 10 Gew.-% nicht überschreiten. Sind zu hohe Anteile an Polyolen enthalten, können die Aushärtung und die UV-Stabilität beeinträchtigt werden oder es kann zu Trübung oder Verfärbung kommen. Bevorzugte Polysilikate sind Alkali-Polysilikate, insbesondere Kalium-Polysilikat. Intumeszierende Schichten mit Kalium-Polysilikat können im Cast in place-Verfahren mit sehr geringen Schichtdicken ausgeführt werden, so dass die Auswahl dieser Polysilikate für die Herstellung besonders dünner Verbundgläser von Vorteil ist. Die Schichtdicke der intumeszierenden Schicht beträgt vorzugsweise 1 mm bis 10 mm, insbesondere bis zu 8 mm, oder bis zu 5 mm, vorzugsweise aber nur bis zu 3 mm. Es wurde überraschend gefunden, dass auch mit so geringen Schichtdicken, sehr hohe Brandwiderstände erreichbar sind.

In einer Ausführungsform ist die brandzugewandte und/oder brandabgewandte Außenscheibe chemisch vorgespannt. Chemische Vorspannverfahren sind dem Fachmann bekannt. Sie induzieren eine Druckspannung durch Austausch von kleineren Ionen gegen größere. Auf diese Weise wird die Bruchfestigkeit einer Scheibe erhöht. Es wurde gefunden dass eine chemische Vorspannung möglich ist, ohne dass die Schneidbarkeit beeinträchtigt wird, wenn die Druckspannung an der Oberfläche der chemisch vorgespannten Scheibe nicht mehr als 1000 MPa, nicht mehr als 800 MPa, nicht mehr als 600 MPa, insbesondere nicht mehr als 400 MPa und besonders bevorzugt weniger als 200 MPa beträgt. Als "thermisch vorgespannt" wird erfindungsgemäß eine Scheibe verstanden, die aufgrund thermischer Vorspannung eine Druckspannung an ihrer Oberfläche von mehr als 200 MPa aufweist. Das Verbundglas dieser Erfindung weist keine thermisch vorgespannten Scheiben auf, da diese nicht schneidbar sind.

In einer Ausführungsform der Erfindung ist die brandzugewandte und/oder die brandabgewandte Außenscheibe eine Glaskeramikscheibe, wobei es erfindungsgemäß bevorzugt ist, dass in dieser Ausführungsform nur eine der beiden Außenscheiben, insbesondere nur die brandabgewandte Außenscheibe eine Glaskeramikscheibe ist. Der Grund ist, dass bei Glaskeramikscheiben mit besonders geringer thermischer Ausdehnung nicht gewährleistet ist, dass diese bei Hitzeeinwirkung zerstört werden und somit eine Druckentlastung ermöglicht wird. Werden sowohl auf der brandzugewandten als auch auf der brandabgewandten Seite Glaskeramikscheiben mit sehr geringer thermischer Ausdehnung verwendet, kann es im ungünstigen Fall dazu kommen, dass die brandabgewandte Außenscheibe im Brandfall zuerst bricht, sodass keine ausreichenden Brandwiderstände mehr erzielbar sind.

Das Verbundglas der vorliegenden Erfindung soll schneidbar sein. "Schneidbar" bedeutet erfindungsgemäß, dass das Verbundglas mittels Wasserstrahlschneiden und/oder Sägen in kleinere Teile geteilt werden kann, ohne dass es zum Bruch der Außenscheiben kommt. Bevorzugt ist Wasserstrahlschneiden, da sich so bessere Schnittkanten erzielen lassen. In einer bevorzugten Ausführungsform wird das Wasserstrahlschneiden mit einem Druck von 1.000 bis 5.000 bar, insbesondere von 2.000 bis 4.000 bar durchgeführt. Es kann vorzugsweise eine Granatsandzugabe erfolgen, insbesondere in einer Menge von 3 bis 40 kg/h. Die Schnittgeschwindigkeit sollte möglichst im Bereich von 50 bis 1.000 mm/min liegen. Wasserstrahlschneiden ist besonders für das Schneiden chemisch vorgespannter Gläser geeignet. Für das Sägen sollte insbesondere ein Diamantsägeblatt eingesetzt werden. Es wird vorzugsweise mit einem Vorschub von 300 bis 500 mm/min gesägt.

Erfindungsgemäß ist auch ein Verbundglas, in dem die Biegezugfestigkeit der brandzugewandten und/oder der brandabgewandten Außenscheibe $\geq$ 100 N/mm$^2$ oder $\geq$ 140 N/mm$^2$ beträgt. Die Biegezugfestigkeit kann gemäß DIN EN 1288-3:2000-09 bestimmt werden. Hohe Biegezugfestigkeiten der verwendeten Außenscheiben haben den Vorteil, dass das Verbundglas eine hohe mechanische Stabilität erhält bzw. verhältnismäßig dünne Scheiben verwendet werden können. Somit lässt sich insbesondere eine bevorzugte Ausführungsform der Erfindung verwirklichen, in der das Verbundglas eine Dicke von weniger als 20 mm, insbesondere weniger als 15 mm oder sogar weniger als 13 mm, aufweist. Schneidbare Verbundgläser des Standes der Technik mit ähnlichen Brandwiderständen wie die erfindungsgemäßen sind in der Regel wesentlich dicker, insbesondere dicker als 20 mm. Auf dem Markt sind schneidbare dünne Gläser nicht erhältlich, wohl wegen mangelnder Zuverlässigkeit im Brandversuch. Marktverfügbare schneidbare Gläser mit EW 120 sind über 50 mm dick. Natürlich müssen die Verbundgläser dieser Erfindung eine gewisse Mindestdicke aufweisen, um die geforderten Eigenschaften im Hinblick auf den Brandwiderstand zu erreichen. Daher sind die Verbundgläser dieser Erfindung vorzugsweise wenigstens 7 mm, wenigstens 8 mm oder wenigstens 10 mm dick.

Vorzugsweise umfasst das Verbundglas eine Randabdichtung, um zu vermeiden, dass sich die Eigenschaften der intumeszierenden Schicht mit der Zeit verändern. In einer Ausführungsform beträgt der Abstand zwischen der intumeszierenden Schicht und dem Rand des Verbundglases an mindestens einer, insbesondere an mindestens zwei Seiten, maximal 5 mm. Anders ausgedrückt, wird eine weniger breite Dichtung benötigt, um die Intumeszenzschicht gegen Umwelteinflüsse zu schützen, eine gewisse Mindestbreite wie z.B. mindestens 1 mm oder mindestens 3 mm sind aber vorteilhaft. Die Breite der Dichtung ist deren Ausdehnung parallel zu den Hauptseiten der Außenscheiben und senkrecht zum Längsverlauf des mit der Dichtung abgedichteten Randes. Geschnittene Glasränder können mit relativ schmalen Dichtungen abgedichtet werden, z.B. mit Polysulfid-Dichtungen. So lassen sich kleinere Dichtungsbereiche erzielen, was den Vorteil hat, das weniger brennbares Dichtungsmaterial in den Verbundgläsern verwendet werden kann. Dichtungen, die bereits bei der Fertigung eingebracht werden, müssen neben dem Widerstand gegen Umwelteinflüsse auch dem hydrostatischen Druck beim Einfüllen des Intumeszenzmaterials standhalten und sind daher breiter, insbesondere ca. 10 mm.

Als Glasscheibe für die brandzugewandte und/oder brandabgewandte Außenscheibe wird Floatglas verwendet. Bevorzugtes Floatglas ist Borosilicatglas oder Kalknatronglas. Kalknatronglas kann insbesondere als brandzugewandte Außenscheibe zusammen mit Glaskeramik als brandabgewandte Außenscheibe zum Einsatz kommen. Besonders bevorzugt ist Borosilicatglas, weil dieses mit den hierin beschriebenen gewünschten Eigenschaften, insbesondere dem thermischen Ausdehnungskoeffizienten, erhältlich ist.

Es hat sich als besonders vorteilhaft herausgestellt, Borosilicatglasscheiben zu verwenden, die ein Anteil an SiO$_2$ von wenigstens 78 Molprozent aufweisen. Borosilikatgläser mit geringeren Anteilen dieser Komponente zeigen oft deutlich höhere thermische Ausdehnungskoeffizienten. Aus dem gleichen Grund beträgt der Gehalt an Alkalimetalloxiden in den bevorzugten Borosilikatgläsern insbesondere höchstens 9 Molprozent, vorzugsweise höchstens 8 Molprozent oder höchstens 7 Molprozent. Der Gehalt an Alkalimetalloxiden hat einen besonders großen Einfluss auf den thermischen Ausdehnungskoeffizienten. Bevorzugte Borosilikatgläser enthalten $Na_2O$ in einem größeren Anteil als $K_2O$, weil dadurch eine bessere chemische Vorspannbarkeit erzielbar ist. Besonders bevorzugte Borosilikatgläser umfassen die in der nachfolgenden Tabelle aufgelisteten Komponenten in den dort angegebenen Bereichen in Molprozent.

|  | min | max |
| --- | --- | --- |
| $SiO_2$ | 78 | 86 |
| $B_2O_3$ | 8 | 17 |
| $Al_2O_3$ | >0 | 4 |
| $Na_2O$ | 1 | 6 |
| $K_2O$ | >0 | 3 |
| CaO | 0 | 2 |
| Summe | 100 | 100 |

Mit den erfindungsgemäßen Verbundgläsern lassen sich unter Verwendung geeigneter, dem Fachmann bekannter Rahmenkonstruktionen besonders gute Brandwiderstände erreichen, insbesondere Brandwiderstände EW 120 nach DIN EN 13501-2:2016. Vorzugsweise wird dieser Brandwiderstand bis zu einer Größe des Verbundglases von 2 $m^2$, insbesondere bis 3 $m^2$ oder bis 4 $m^2$ erreicht. Hierfür ist es vorteilhaft, dass das Material der brandzugewandten und/oder brandabgewandten Außenscheibe einen Erweichungspunkt von wenigstens 800 °C aufweist. Der "Erweichungspunkt" ist die Temperatur, bei der das Material eine Viskosität von wenigstens $10^{7,6}$ dPas aufweist. Der Erweichungspunkt kann bestimmt werden nach DIN ISO 7884-6 Glas - Viskosität und viskosimetrische Festpunkte - Teil 6: Bestimmung der Erweichungstemperatur (ISO 7884-6:1987).

**Brandschutzsystem**

Erfindungsgemäß ist auch ein Brandschutzsystem mit einem Verbundglas wie zuvor beschrieben und einem Rahmen, in den das Verbundglas eingefasst ist. Ein solches Brandschutzsystem eignet sich zur Verwendung als Fenster, Tür oder Festverglasung beispielsweise in der Architektur, dem Fahrzeug- und Flugzeugbau.

Die Brandschutzsysteme dieser Erfindung bestehen vorzugsweise im Wesentlichen aus Verbundglas, Rahmen, Dichtungen und Befestigungen.

Für die unterschiedlichen Brandschutzklassen und gegebenenfalls zur Erreichung zusätzlicher Eigenschaften (Wärmedurchgang, Schallschutz, Einbruchshemmung etc. ) kann Verbundglas unterschiedlichen Aufbaues und Dicke eingesetzt werden. Entsprechend können auch Rahmen aus unterschiedlichem Material (Holz, Alu, Stahl + Kombinationen) und Bauart (Rohr, gezogene Profile, thermisch getrennt etc.) gewählt werden.

Für die vorliegende Erfindung sind Stahlrahmensysteme bevorzugt, da diese für eine lange Standzeit besonders geeignet sind. Das Stahlrahmensystem besteht aus einem umlaufenden Profil, im einfachsten Fall aus Stahlrohr. Das Profil kann als Anschlagprofil ausgeführt sein. Das Profil kann thermisch getrennt ausgeführt sein. Im umlaufendem Profil wird das Verbundglas zwischen Anschlag und Glasleisten oder nur zwischen Glasleisten fixiert.

Für Anwendungen mit isolierender Eigenschaft (EI) können thermisch getrennte bzw. mit kühlenden Füllungen versehene Rahmen verwandt werden.

Erfindungsgemäße Brandschutzsysteme erreichen einen Brandwiderstand, insbesondere wenigstens EW 120. In einer Ausführungsform umfasst der Rahmen ein Stahlrahmensystem für E/EW 120. Versuch und Messung erfolgen nach den Normen DIN EN 1363/EN 1364. Die Prüfergebnisse ermöglichen dann eine Klassifizierung EW 120 nach DIN EN 13501-2:2016.

**Verwendungen**

Erfindungsgemäß ist auch die Verwendung des hierin beschriebenen Verbundglases und des Brandschutzsystems als Architektur- oder Fahrzeugverglasung, insbesondere in Land-, Luft- oder Wasserfahrzeugen.

**Herstellungsverfahren**

Erfindungsgemäß ist auch ein Verfahren zur Herstellung des zuvor beschriebenen Verbundglases mit den Schritten (in beliebiger Reihenfolge soweit technisch sinnvoll):

- im Wesentlichen paralleles Anordnen der beiden Außenscheiben,

- Bilden eines Zwischenraumes zwischen zwei im Wesentlichen parallelen Scheiben des Verbundglases und Abdichten des Zwischenraumes mit wenigstens einer Randabdichtung,

- Befüllen des Zwischenraumes mit einem Intumeszenzmaterial und Härten des Intumeszenzmaterials.

Das Herstellungsverfahren ist also ein Cast in place-Verfahren. Der Zwischenraum zwischen den beiden im Wesentlichen parallelen Scheiben muss nicht zwingend durch die beiden Außenscheiben gebildet werden, sondern kann beispielsweise auch durch zwei innen liegende Scheiben des Verbundglases gebildet werden, die nicht die Außenscheiben sind. Alternativ kann eine der beiden im Wesentlichen parallelen Scheiben, die den Zwischenraum bilden, eine Außenscheibe sein und die andere eine innenliegende Scheibe des Verbundglases. In einer bevorzugten Ausführungsform wird der Zwischenraum jedoch zwischen den beiden Außenscheiben gebildet.

Optional weist das Verfahren den weiteren Schritt auf:

- Zuschneiden des Verbundglases auf ein vorbestimmtes Format.

Es ist ein besonderer Vorteil der Verbundgläser der vorliegenden Erfindung, dass diese nach der Herstellung auf ein vorbestimmtes Format zugeschnitten werden können. Das Zuschneiden des Verbundglases erfolgt dabei vorzugsweise durch Wasserstrahlschneiden oder Sägen. Diese beiden Verfahren sind dem Fachmann grundsätzlich für das Zuschneiden von Gläsern bekannt und es können überraschenderweise die üblichen Verfahren ohne besondere Vorkehrungen verwendet werden. In einer bevorzugten Ausführungsform wird das Wasserstrahlschneiden mit einem Druck von 1.000 bis 5.000 bar, insbesondere von 2.000 bis 4.000 bar durchgeführt. Es kann vorzugsweise eine Granatsandzugabe erfolgen, insbesondere in einer Menge von 3 bis 40 kg/h. Die Schnittgeschwindigkeit sollte möglichst im Bereich von 50 bis 1.000 mm/min liegen. Wasserstrahlschneiden ist besonders für das Schneiden chemisch vorgespannter Gläser geeignet. Für das Sägen sollte insbesondere ein Diamantsägeblatt eingesetzt werden. Es wird vorzugsweise mit einem Vorschub von 300 bis 500 mm/min gesägt.

In einer Ausführungsform schließt sich der folgende weitere Schritt an:

- Anbringen einer Abdichtung auf den Schnittseiten des Verbundglases.

Ein nach der Cast in place-Herstellung nicht zugeschnittenes Verbundglas weist die während des Herstellungsverfahrens angebrachte Randabdichtung auf und muss daher nicht weiter abgedichtet werden. Die erfindungsgemäßen Verbundgläser hingegen lassen sich zuschneiden und sollten daher anschließend nochmals abgedichtet werden, um die Schnittkanten und insbesondere die Intumeszenzschicht vor Umwelteinflüssen zu schützen.

Kurzbeschreibung der Figuren

**Figur 1**    zeigt ein erfindungsgemäßes Brandschutzsystem mit einem erfindungsgemäßen Verbundglas in einem Rahmen.

**Figur 2**    zeigt eine Detailansicht eines erfindungsgemäßen Verbundglases mit besonderer Randabdichtung.

**Figur 3**    illustriert die Messung der Temperaturunterschiedsfestigkeit.

Figurenbeschreibung

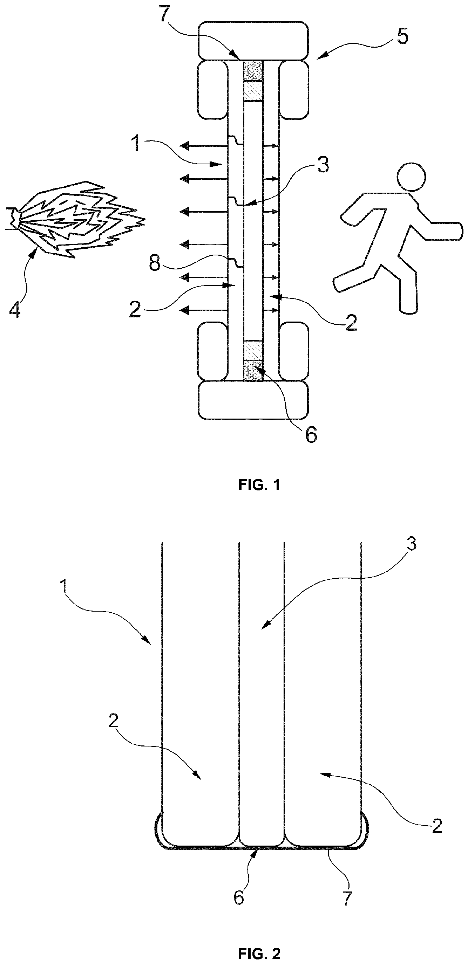

**Figur 1** zeigt ein erfindungsgemäßes Brandschutzsystem mit einem Verbundglas 1 und einem Rahmen 5, in den das Verbundglas 1 eingefasst ist. Das Verbundglas 1 umfasst zwei Außenscheiben 2, von denen eine dem Brand 4 zugewandt ist und eine dem Brand 4 abgewandt ist. Das Verbundglas 1 weist eine Randabdichtung 6 auf, die ein Auslaufen des Intumeszenzmaterials der intumeszierenden Schicht 3 während der Herstellung verhindert. Das Verbundglas 1 weist an den flächenmäßig kleinsten Seiten Ränder 7 auf. Die Intumeszenzschicht 3 ist in dieser Ausführungsform von den Rändern 7 beabstandet aufgrund der Anordnung der Randabdichtung 6 zwischen den Scheiben.

Die brandabgewandten und brandzugewandten Außenscheiben 2 können aus gleichartigem Material bestehen und somit einen symmetrischen Verbund bilden; oder sie können aus verschiedenartigem Material bestehen und einen asymmetrischen Verbund darstellen. Es ist erfindungsgemäß erforderlich, dass die dem Brand 4 zugewandte Außenscheibe 2 einen thermischen Ausdehnungskoeffizienten von wenigstens $1*10^{-6}$ /K aufweist, um zu gewährleisten, dass diese Scheibe im Brandfall bricht. Zur Illustration des gewünschten Bruches der dem Brand 4 zugewandten Außenscheibe 2 sind Risse 8 in der Figur gezeigt. Die dem Brand 4 abgewandte Außenscheibe 2 hingegen zeigt keine solchen Risse. Die dem Brand 4 abgewandte Außenscheibe 2 soll einen sehr geringen thermischen Ausdehnungskoeffizienten von maximal $4,5*10^{-6}$/K haben, damit diese möglichst lang der Hitze des Brandes 4 standhält. Zu Beginn des Brandversuchs bzw. zu Beginn eines Brandes spielt die thermische Ausdehnung eine entscheidende Rolle. Aufgrund des raschen Anstiegs der Einheits-Temperaturzeitkurve und dem möglichen Auftreten von Hot-Spots belasten die Scheibe hohe Temperurdifferenzen. Zum Ende des Brandversuchs ist es ein hoher Erweichungspunkt, der eine lange Standzeit verspricht.

In einer bevorzugten asymmetrischen Ausführungsform ist die dem Brand 4 abgewandte Außenscheibe 2 eine gefloatete Glaskeramikscheibe oder eine gefloatete Borosilicatglasscheibe mit geringer thermischer Ausdehnung und die dem Brand 4 zugewandte Außenscheibe 2 eine Floatglasscheibe, wie zum Beispiel eine gefloatete Scheibe aus Kalknatronglas oder Borosilicatglas. In einer bevorzugten symmetrischen Ausführungsform ist sowohl die dem Brand 4 abgewandte Außenscheibe 2 als auch die dem Brand 4 zugewandte Außenscheibe 2 eine gefloatete Borosilicatglasscheibe. Die für die Außenscheiben 2 vorgesehenen gefloateten Glas- und Glaskeramikscheiben sind vorzugsweise nicht thermisch vorgespannt, da thermisch vorgespannte Scheiben nur schwer oder überhaupt nicht schneidbar sind. In einer Ausführungsform kann eine der Außenscheiben 2 oder beide chemisch vorgespannt sein. Es hat sich herausgestellt, dass chemisch vorgespannte Borosilicatglasscheiben überraschenderweise schneidbar sind.

**Figur 2** zeigt eine alternative Ausführungsform eines erfindungsgemäßen Verbundglases mit zwei Außenscheiben 2, zwischen denen eine intumeszierenden Schicht 3 angeordnet ist. Die Randabdichtung 6 ist in diesem Fall durch eine dünne Schicht gebildet, die als Kunststoff oder Metallfolie, insbesondere Aluminiumfolie, ausgebildet sein kann. Die Randabdichtung 6 umschließt vorzugsweise den gesamten Rand 7 des Verbundglases 1 und kann sich zur besseren Abdichtung bis auf die Außenseiten der Außenscheiben 2 erstrecken.

**Figur 3** veranschaulicht die Ermittlung der Temperaturunterschiedsfestigkeit.

Die Temperaturunterschiedsfestigkeit gibt die Widerstandsfähigkeit einer Glasscheibe gegenüber Temperaturunterschieden zwischen heißem, mittlerem Bereich und kaltem Außenrand an. Das quadratische Prüfformat ist 250 mm $\times$ 250 mm.

Unmittelbar vor der Prüfung werden die Scheiben definiert vorgeschädigt, um den späteren Gebrauchszustand der Oberfläche zu simulieren. Zu diesem Zweck wird die Oberfläche behandelt mit Schmirgel der Körnung 220 gemäß DIN 69176 Teil 2. Der Flächendruck während des Schmirgelvorgangs beträgt $2,0 \pm 0,2$ N/cm$^2$. Die Schmirgelrichtung ist senkrecht zu den Scheibenaußenkanten.

Die Prüfung geschieht in horizontaler Position der Prüfscheibe in einer Anordnung nach Figur 3.

Die Prüfung der Scheibe 9 erfolgt durch einseitiges Aufheizen eines kreisförmigen mittleren Bereichs 11 der Prüfscheibe 9. Der Durchmesser der beheizten Kreisfläche 11 beträgt 175 mm. Der Mittelpunkt des Kreises ist azentrisch und nach Figur 3 so gewählt, dass unterschiedliche Abstände des Randes 12 der beheizten Kreisfläche von der Außenkante 10 existieren, wobei der Mindestabstand 13 zu einer Außenkante 25 mm beträgt, der Abstand 14 zur gegenüberliegenden Außenkante dagegen 50 mm. Der Abstand 15a und 15b zu den beiden übrigen Kanten beträgt übereinstimmend 37,5 mm.

Der Randbereich der Prüfscheibe wird auf einer niedrigen Temperatur von $25 \pm 5$°C gehalten, beispielsweise durch einen metallenen Stützrahmen.

Die Aufheizung erfolgt temperaturgesteuert bis zum Bruch der Scheibe, der üblicherweise am Ort des größten Temperaturgradienten auftritt, d.h. im Bereich der Außenkante mit dem geringsten Abstand zum beheizten Mittenbereich. Die Temperatursteuerung gewährleistet einen Bruch innerhalb einer Aufheizzeit von $5 \pm 1$ Minuten.

Kennzahl für die Temperaturunterschiedsfestigkeit ist die zum Bruchzeitpunkt der Prüfscheibe erreichte Maximaltemperatur auf der der Beheizung gegenüberliegenden Seite der Scheibe.

Beispiele

**Beispiel 1 - symmetrische Ausführungsform**

| | Außenscheibe brandzugewandt | Intumeszenzschicht | Außenscheibe brandabgewandt |
|---|---|---|---|
| **Material** | Borosilikatglas Borofloat® 33 | Kalium-Polysilikat | Borosilikatglas Borofloat® 33 |
| **Dicke** | 4 mm | 3 mm | 4 mm |

(fortgesetzt)

|  | Außenscheibe brandzugewandt | Intumeszenzschicht | Außenscheibe brandabgewandt |
|---|---|---|---|
| **TUF*** | 185 °C | ./. | 185 °C |
| **spez. Wärmespannung** | 0,256 MPa/K | ./. | 0,256 MPa/K |
| **thermischer Ausdehnungskoeffizient** | $3,3 * 10^{-6}$ /K | ./. | $3,3 * 10^{-6}$ /K |
| **chemische Vorspannung** | - | ./. | - |
| **Erweichungspunkt** | > 800 °C | ./. | > 800 °C |
| * Temperaturunterschiedsfestigkeit | | | |

Das Verbundglas wurde nach dem Cast in place-Verfahren hergestellt mit einer Dichtung von 10 mm Breite. Die Größe betrug 1 m × 2 m. Ein Brandversuch wurde durchgeführt mit dem Verbundglas in einem Stahlrahmen und brandseitig angebrachter Glasleiste. Die brandzugewandte Außenscheibe brach in der ersten Versuchsminute. Der Wärmedurchgang betrug 12 kW/m² in der 120 Minute und blieb damit unter dem Grenzwert von 15 kW/m². Ein Brandwiderstand von EW 120 wird somit erreicht.

**Beispiel 2 - symmetrische Ausführungsform**

|  | Außenscheibe brandzuqewandt | Intumeszenzschicht | Außenscheibe brandabqewandt |
|---|---|---|---|
| **Material** | Borosilikatglas Borofloat® 33 | Kalium-Polysilikat | Borosilikatglas Borofloat® 33 |
| **Dicke** | 4 mm | 3 mm | 4 mm |
| **TUF*** | 235 °C | ./. | 235 °C |
| **spez. Wärmespannung** | 0,256 MPa/K | ./. | 0,256 MPa/K |
| **thermischer Ausdehnungskoeffizient** | $3,3 * 10^{-6}$ /K | ./. | $3,3 * 10^{-6}$ /K |
| **chemische Vorspannung (Druckspannung)** | 125 MPa | ./. | 125 MPa |
| **Erweichungspunkt** | > 800 °C | ./. | > 800 °C |
| * Temperaturunterschiedsfestigkeit | | | |

Das Verbundglas wurde nach dem Cast in place-Verfahren hergestellt und danach auf eine Größe von 1 m × 2 m zugeschnitten. Ein Brandversuch wurde durchgeführt mit dem Verbundglas in einem Stahlrahmen und beidseitig angebrachter Glasleisten. Die brandzugewandte Außenscheibe brach in der ersten Versuchsminute. Der Wärmedurchgang betrug 11 kW/m² in der 120 Minute und blieb damit unter dem Grenzwert von 15 kW/m². Ein Brandwiderstand von EW 120 wird somit erreicht.

**Beispiel 3 - asymmetrische Ausführungsform**

|  | Außenscheibe brandzugewandt | Intumeszenzschicht | Außenscheibe brandabgewandt |
|---|---|---|---|
| Material | Kalknatron-Floatglas | Kalium-Polysilikat | Borosilikatglas Borofloat® 33 |
| Dicke | 4 mm | 3 mm | 4 mm |
| TUF* | 70 °C | ./. | 185 °C |
| spez. Wärmespannung | 0,822 MPa/K | ./. | 0,256 MPa/K |
| thermischer Ausdehnunqskoeffizient | $8,9 * 10^{-6}$ /K | ./. | $3,3 * 10^{-6}$/K |
| chemische Vorspannung (Druckspannung) | - | ./. | - |
| Erweichungspunkt | < 750 °C | ./. | > 800 °C |
| * Temperaturunterschiedsfestigkeit | | | |

Das Verbundglas wurde nach dem Cast in place-Verfahren hergestellt mit einer Dichtung von 10 mm Breite. Die Größe betrug 1 m × 2,3 m. Ein Brandversuch wurde durchgeführt mit dem Verbundglas in einem Stahlrahmen und beidseitig angebrachter Glasleisten. Die brandzugewandte Außenscheibe brach in der ersten Versuchsminute. Der Wärmedurchgang betrug < 15 kW/m$^2$ in der 120 Minute und blieb damit unter dem Grenzwert von 15 kW/m$^2$. Ein Brandwiderstand von EW 120 wird somit erreicht.

**Beispiel 4** - **asymmetrische Ausführungsform**

|  | Außenscheibe brandzugewandt | Intumeszenzschicht | Außenscheibe brandabgewandt |
|---|---|---|---|
| Material | Kalknatron-Floatglas | Kalium-Polysilikat | Borosilikatglas Borofloat® 40 |
| Dicke | 4 mm | 4 mm | 4 mm |
| TUF* | 70 °C | ./. | 295 °C |
| spez. Wärmespannung | 0,822 MPa/K | ./. | 0,345 MPa/K |
| thermischer Ausdehnunqskoeffizient | $8,9 * 10^{-6}$ /K | ./. | $4,0 * 10^{-6}$ /K |
| chemische Vorspannung (Druckspannung) | - | ./. | 225 MPa |
| Erweichungspunkt | < 750 °C | ./. | > 820 °C |
| * Temperaturunterschiedsfestigkeit | | | |

Das Verbundglas wurde nach dem Cast in place-Verfahren hergestellt und danach auf eine Größe von 0,5 m × 0,5 m zugeschnitten. Die Schnittkanten wurden mit einem Aluminium-Tape versiegelt. Ein Brandversuch wurde durchgeführt mit dem Verbundglas in einem thermisch isolierten Stahlrahmen und luftseitig angebrachter Glasleiste. Die brandzugewandte Außenscheibe brach in der zweiten Versuchsminute. Der Wärmedurchgang betrug < 3 kW/m$^2$ in der 120 Minute und blieb damit sehr deutlich unter dem Grenzwert von 15 kW/m$^2$. Ein Brandwiderstand von EW 120 wird somit erreicht.

**Beispiel 5 - asymmetrische Ausführungsform**

| | Außenscheibe brandzugewandt | Intumeszenzschicht | Außenscheibe brandabgewandt |
|---|---|---|---|
| **Material** | Kalknatron-Floatglas | Kalium-Polysilikat | Glaskeramik Pyran® Platinum |
| **Dicke** | 4 mm | 4 mm | 5 mm |
| **TUF\*** | 70 °C | ./. | > 820 °C |
| **spez. Wärmespannung** | 0,822 MPa/K | ./. | - |
| **thermischer Ausdehnungskoeffizient** | $8,9 * 10^{-6}$ /K | ./. | $\leq 1,0 * 10^{-6}$ /K |
| **chemische Vorspannung (Druckspannung)** | - | ./. | - |
| **Erweichungspunkt** | < 750 °C | ./. | > 850 °C |
| \* Temperaturunterschiedsfestigkeit | | | |

Das Verbundglas wurde nach dem Cast in place-Verfahren hergestellt und danach auf eine Größe von 0,5 m × 0,5 m zugeschnitten. Die Schnittkanten wurden mit einer Polysulfiddichtung versiegelt. Ein Brandversuch wurde durchgeführt mit dem Verbundglas in einem Stahlrahmen und luftseitig angebrachter Glasleiste. Die brandzugewandte Außenscheibe brach in der zweiten Versuchsminute. Der Wärmedurchgang betrug < 3 kW/m² in der 120 Minute und blieb damit sehr deutlich unter dem Grenzwert von 15 kW/m². Ein Brandwiderstand von EW 120 wird somit erreicht.

Bezugszeichenliste

| | |
|---|---|
| 1 | Verbundglas |
| 2 | Außenscheibe |
| 3 | intumeszierende Schicht |
| 4 | Brand |
| 5 | Rahmen |
| 6 | Randabdichtung |
| 7 | Rand des Verbundglases |
| 8 | Riss |
| 9 | Prüfscheibe |
| 10 | Außenkante |
| 11 | mittlerer Bereich |
| 12 | Rand der beheizten Kreisfläche |
| 13 | Mindestabstand |
| 14 | Abstand zur gegenüberliegenden Außenkante |
| 15a,b | Abstand zu den übrigen Kanten |

**Patentansprüche**

1. Verbundglas 1 mit Widerstand gegen Brandwirkung, mit einer brandabgewandten und einer brandzugewandten Seite, aufweisend genau zwei Scheiben aus Floatglas oder gefloateter Glaskeramik,

   wobei das Verbundglas 1 zumindest eine unter Temperatureinwirkung intumeszierende Schicht 3 enthält,
   wobei das Verbundglas 1 je eine Außenscheibe 2 aus Floatglas oder gefloateter Glaskeramik auf der brandabgewandten und auf der brandzugewandten Seite als abschließende Scheiben aufweist,
   **dadurch gekennzeichnet, dass** die brandzugewandte und/oder die brandabgewandte Außenscheibe 2 einen thermischen Längenausdehnungskoeffizienten $\alpha$ über einen Temperaturbereich von 20 bis 300 °C von höchstens $4,5*10^{-6}$ /K aufweist,

wobei die brandzugewandte Außenscheibe 2 einen thermischen Längenausdehnungskoeffizienten $\alpha$ über einen Temperaturbereich von 20 bis 300 °C von wenigstens $1*10^{-6}$ /K aufweist,

wobei das Verbundglas 1 keine chemisch vorgespannten Scheiben mit einer Druckspannung an der Oberfläche von mehr als 1000 MPa und keine thermisch vorgespannten Scheiben mit einer Druckspannung an der Oberfläche von mehr als 200 MPa aufweist,

wobei der thermische Längenausdehnungskoeffizient $\alpha$ gemäß DIN ISO 7991:1998-02 bestimmt wird.

2. Verbundglas nach einem der vorhergehenden Ansprüche, wobei die intumeszierende Schicht 3 ein Polysilikat-Interlayer ist.

3. Verbundglas nach Anspruch 2, wobei der Polysilikat-Interlayer ein Kalium-Polysilikat-Interlayer ist, insbesondere mit einem Gehalt an Polyolen von maximal 10 Gew.-%.

4. Verbundglas nach wenigstens einem der vorhergehenden Ansprüche, wobei der thermische Längenausdehnungskoeffizienten $\alpha$ wenigstens einer der Außenscheiben 2 weniger als $4*10^{-6}$ /K bevorzugt weniger als $3,3*10^{-6}$ /K beträgt.

5. Verbundglas nach wenigstens einem der vorhergehenden Ansprüche, wobei das Verbundglas 1 eine Dicke von weniger als 20 mm, insbesondere weniger als 15 mm, bevorzugt weniger als 13 mm, aufweist.

6. Verbundglas nach wenigstens einem der vorhergehenden Ansprüche, wobei das Verbundglas 1 schneidbar ist, insbesondere mit Wasserstrahl oder Säge.

7. Verbundglas nach wenigstens einem der vorhergehenden Ansprüche, wobei das Floatglas ein gefloatetes Borosilicatglas ist.

8. Brandschutzsystem mit einem Verbundglas 1 nach einem der vorhergehenden Ansprüche und einem Rahmen 5, in den das Verbundglas 1 eingefasst ist.

9. Brandschutzsystem nach Anspruch 8, mit einem Brandwiderstand von wenigstens EW 120.

10. Verwendung eines Verbundglases oder Brandschutzsystems nach wenigstens einem der vorhergehenden Ansprüche als Architektur- oder Fahrzeugverglasung, insbesondere in Land-, Luft- oder Wasserfahrzeugen.

11. Verfahren zur Herstellung eines Verbundglases nach wenigstens einem der Ansprüche 1 bis 7, mit den Schritten:

   - im Wesentlichen paralleles Anordnen der beiden Außenscheiben 2,
   - Bilden eines Zwischenraumes zwischen zwei im Wesentlichen parallelen Scheiben des Verbundglases 1 und Abdichten des Zwischenraumes mit wenigstens einer Randabdichtung 6,
   - Befüllen des Zwischenraumes mit einem Intumeszenzmaterial und Härten des Intumeszenzmaterials.

12. Verfahren nach Anspruch 11, mit dem Schritt

   - Zuschneiden des Verbundglases 1 auf ein vorbestimmtes Format.

**Claims**

1. A laminated glass 1 with resistance against the effects of fire having a side being the far side with respect to the fire and a side facing the fire, comprising exactly two panes of float glass or floated glass ceramic,

   wherein the laminated glass 1 contains at least one layer 3 being intumescent under temperature exposure, wherein the laminated glass 1 comprises an outer pane 2 of float glass or floated glass ceramic on the side being the far side with respect to the fire and on the side facing the fire each as final panes,

   **characterized in that** the outer pane 2 facing the fire and/or the outer pane 2 on the side being the far side with respect to the fire have a coefficient of thermal expansion $\alpha$ of at most $4.5*10^{-6}$ /K,

   wherein the outer pane 2 facing the fire has a coefficient of thermal expansion $\alpha$ in a temperature range of from 20 to 300 °C of at least $1*10^{-6}$ /K,

wherein the laminated glass 1 does not comprise any chemically prestressed panes with a compressive stress at the surface of more than 1000 MPa and does not comprise any thermally prestressed panes with a compressive stress at the surface of more than 200 MPa,

wherein the coefficient of thermal expansion $\alpha$ is determined according to DIN ISO 7991:1998-02.

2. The laminated glass according to one of the preceding claims, wherein the intumescent layer 3 is a polysilicate interlayer.

3. The laminated glass according to claim 2, wherein the polysilicate interlayer is a potassium polysilicate interlayer, in particularly with a content of polyols of at most 10 % by weight.

4. The laminated glass according to at least one of the preceding claims, wherein the coefficient of thermal expansion $\alpha$ of at least one of the outer panes 2 is less than $4*10^{-6}$ /K, preferably less than $3.3*10^{-6}$ /K.

5. The laminated glass according to at least one of the preceding claims, wherein the laminated glass 1 has a thickness of less than 20 mm, in particularly less than 15 mm, preferably less than 13 mm.

6. The laminated glass according to at least one of the preceding claims, wherein the laminated glass 1 can be cut, in particularly with water jet or saw.

7. The laminated glass according to at least one of the preceding claims, wherein the float glass is a floated borosilicate glass.

8. A fire protection system with a laminated glass 1 according to one of the preceding claims and a frame 5 in which the laminated glass 1 is cased.

9. The fire protection system according to claim 8 with a fire resistance of at least EW 120.

10. A use of a laminated glass or a fire protection system according to at least one of the preceding claims as architecture or vehicle glazing, in particularly in land, air or water vehicles.

11. A method for the production of a laminated glass according to at least one of claims 1 to 7 with the steps of:

- arranging both outer panes 2 in substantially parallel orientation,
- forming a spacing between two substantially parallel panes of the laminated glass 1 and sealing the spacing with at least one edge seal 6,
- filling the spacing with an intumescence material and hardening of the intumescence material.

12. The method according to claim 13 with the step of

- cutting the laminated glass 1 into a predetermined shape.

**Revendications**

1. Verre feuilleté 1 résistant à l'action du feu, ledit verre feuilleté comprenant une face opposée au feu et une face tournée vers le feu, comportant exactement deux plaques en verre flotté ou en vitrocéramique flotté,

le verre feuilleté 1 contenant au moins une couche intumescente 3 sous l'influence de la température,
le verre feuilleté 1 comportant comme plaques d'extrémité une plaque extérieure 2 en verre flotté ou en vitrocéramique flotté sur la face opposée au feu et sur la face tournée vers le feu, **caractérisé en ce que** la plaque extérieure 2 tournée vers le feu et/ou opposée au feu a un coefficient de dilatation thermique linéaire $\alpha$ d'au plus $4,5*10^{-6}$/K dans une plage de température allant de 20 à 300 °C,
dans lequel la plaque extérieure 2 tournée vers le feu a un coefficient de dilatation thermique linéaire $\alpha$ d'au moins $1,1*10^{-6}$/K dans une plage de température de 20 à 300 °C,
dans lequel le verre feuilleté 1 ne comporte pas de plaques trempées chimiquement avec une contrainte de compression en surface supérieure à 1000 MPa ni de plaques trempées thermiquement avec une contrainte de compression en surface supérieure à 200 MPa,

dans lequel le coefficient de dilatation thermique linéaire $\alpha$ est déterminé selon la norme DIN ISO 7991:1998-02.

**2.** Verre feuilleté selon l'une quelconque des revendications précédentes, dans lequel la couche intumescente 3 étant un intercalaire en polysilicate.

**3.** Verre feuilleté selon la revendication 2, dans lequel l'intercalaire en polysilicate est un intercalaire en polysilicate de potassium, ayant notamment une teneur maximale en polyol de 10 % en poids.

**4.** Verre feuilleté selon l'une au moins des revendications précédentes, dans lequel le coefficient de dilatation thermique linéaire $\alpha$ d'au moins une des plaques extérieures 2 est inférieur à $4*10^{-6}$/K, de préférence inférieur à $3,3*10^{-6}$/K.

**5.** Verre feuilleté selon l'une au moins des revendications précédentes, dans lequel le verre feuilleté 1 a une épaisseur inférieure à 20 mm, notamment inférieure à 15 mm, de préférence inférieure à 13 mm.

**6.** Verre feuilleté selon l'une au moins des revendications précédentes, dans lequel le verre feuilleté 1 peut être découpé, notamment au jet d'eau ou à la scie.

**7.** Verre feuilleté selon l'une au moins des revendications précédentes, dans lequel le verre flotté est un verre borosilicaté flotté.

**8.** Système anti-incendie comprenant un verre feuilleté 1 selon l'une des revendications précédentes et un cadre 5 dans lequel le verre feuilleté 1 est enchâssé.

**9.** Système anti-incendie selon la revendication 8, ayant une résistance au feu d'au moins EW 120.

**10.** Utilisation d'un verre feuilleté ou d'un système anti-incendie selon l'une au moins des revendications précédentes comme vitrage d'architecture ou de véhicule, notamment dans des véhicules terrestres, aériens ou nautiques.

**11.** Procédé de fabrication d'un verre feuilleté selon l'une au moins des revendications 1 à 7, comprenant les étapes suivantes :

- disposer les deux plaques extérieures 2 de manière sensiblement parallèle,
- former un espace intermédiaire entre deux plaques sensiblement parallèles du verre feuilleté 1 et sceller l'espace intermédiaire avec au moins un joint de bord 6,
- remplir l'espace avec une matière intumescente et faire durcir la matière intumescente.

**12.** Procédé selon la revendication 11, comprenant l'étape suivante :

- découper le verre feuilleté 1 à un format prédéterminé.

**FIG. 1**

**FIG. 2**

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2096944 A
- EP 0524418 A1
- US 6379825 B1
- EP 2995450 A1
- DE 102012220009 A1
- EP 2084001 A1